# EUROPÄISCHE PATENTSCHRIFT

(11) **EP 1 671 073 B1**
(45) Veröffentlichungstag und Bekanntmachung des Hinweises auf die Patenterteilung: **11.04.2018**
(21) Anmeldenummer: 04787061.3
(22) Anmeldetag: 30.09.2004
(51) Int. Cl.: F28F 9/02, F28F 27/02, F02B 29/04

(54) **LADELUFTKÜHLER FÜR KRAFTFAHRZEUGE**
CHARGE-AIR COOLER FOR MOTOR VEHICLES
REFROIDISSEUR D'AIR DE SURALIMENTATION POUR VÉHICULES

(30) Priorität: 02.10.2003 DE 10346186
(43) Veröffentlichungstag der Anmeldung: 21.06.2006
(73) Patentinhaber: MAHLE Behr GmbH & Co. KG, 70469 Stuttgart (DE)
(72) Erfinder: AUGENSTEIN, Claus, 70839 Gerlingen (DE); EMRICH, Karsten, 70199 Stuttgart (DE); ENGELHARDT, Martin, 71254 Ditzingen (DE); FÖRSTER, Klaus, 71642 Ludwigsburg (DE); GHIANI, Franco, 74321 Bietigheim-Bissingen (DE); HENDRIX, Daniel, 70736 Fellbach (DE); HOROHO, Scott, Mount Pleasant, SC 29466 (US); KULL, Reinhard, 71642 Ludwigsburg (DE); SCHAIRER, Andre, 70184 Stuttgart (DE); WEILER, Bernd, 73660 Urbach (DE); WEISE, Stefan, Mount Pleasant, SC 29466 (US)
(74) Vertreter: Grauel, Andreas
(86) Internationale Anmeldenummer: PCT/EP2004/010919
(87) Internationale Veröffentlichungsnummer: WO 2005/031239

(56) Entgegenhaltungen:
- EP-A- 0 900 605
- EP-A1- 0 676 609
- WO-A-02/12816
- WO-A-95/31635
- WO-A-99/60322
- DE-A1- 10 056 074
- DE-A1- 19 647 964
- DE-A1- 19 911 334
- FR-A1- 2 588 365
- US-A- 5 090 477
- US-A- 5 485 737
- US-B1- 6 374 911
- PATENT ABSTRACTS OF JAPAN Bd. 1997, Nr. 05, 30. Mai 1997 (1997-05-30) -& JP 09 004995 A (MATSUSHITA REFRIG CO LTD), 10. Januar 1997 (1997-01-10)
- PATENT ABSTRACTS OF JAPAN Bd. 1996, Nr. 09, 30. September 1996 (1996-09-30) -& JP 08 136182 A (TOSHIBA CORP), 31. Mai 1996 (1996-05-31)

## Beschreibung

Die Erfindung betrifft einen Ladeluftkühler für Kraftfahrzeuge, insbesondere für Nutzfahrzeuge nach dem Oberbegriff des Patentanspruches 1.

Wärmeübertrager, wie Ladeluftkühler für heutige Kraftfahrzeuge weisen oft einen gelöteten Wärmeübertragerblock auf, der aus Flachrohren, Wellrippen sowie Rohrböden, welche die Rohrenden aufnehmen, aufgebaut ist. Auf die Rohrböden sind Sammelkästen, beispielsweise so genannte Luftkästen aufgesetzt und mit diesen dicht verbunden. Die Sammelkästen sind - auch bei Nutzfahrzeugen - häufig aus Kunststoff hergestellt und mit den Rohrböden mechanisch, z. B. durch eine Bördelverbindung mit Gummidichtung verbunden. Teilweise sind die Sammelkästen auch als Aluminiumgusskästen ausgebildet, welche mit den ebenfalls aus einem Aluminiumwerkstoff hergestellten Rohrböden verschweißt sind. Ladeluftkühler mit Luftkästen aus Kunststoff wurden beispielsweise durch die DE-A 199 53 785 und die DE-A 199 53 787 der Anmelderin bekannt. Bei höheren Temperaturen, z. B. über 220 Grad Celsius der Ladeluft, wie sie bei zukünftigen Entwicklungen zu erwarten sind, halten Luftkästen aus Kunststoff den Beanspruchungen aus Druck und Temperatur nicht mehr stand - in diesem Fall werden Luftkästen aus einem metallischen Werkstoff, z. B. einem Aluminiumguss eingesetzt. Diese Guss-Luftkästen werden in einem Kokillengussverfahren hergestellt, welches vielfältige gestalterische Möglichkeiten bietet, jedoch sehr aufwendig und kostenintensiv ist.

Es ist eine Aufgabe der vorliegenden Erfindung, einen Ladeluftkühler der eingangs genannten Art dahingehend zu verbessern, dass die Sammelkästen höheren Temperaturen und Drücken standhalten, ohne dass die Herstellkosten wesentlich ansteigen.

Diese Aufgabe wird durch die Merkmale des Patentanspruches 1 gelöst. Der Ladeluftkühler umfasst einen, aus Rohrenden aufweisenden Rohren und aus zwischen den Rohren angeordneten Rippen bestehenden Wärmeübertragerblock und zumindest einen seitlich angeordneten Sammelkasten zur Ein- oder Ausleitung von Ladeluft, wobei der zumindest eine Sammelkasten einen Boden mit Öffnungen zur Aufnahme der Rohrenden, einen Deckel sowie einen Ein- oder Auslassstutzen aufweist. Erfindungsgemäß ist vorgesehen, dass mindestens ein Teil zumindest eines Sammelkastens aus einem Halbzeug durch eine Innen-Hochdruck-Umformung (IHU) hergestellt wird. Durch Verwendung eines metallischen Halbzeuges können die aufgrund von Temperatur und Druck auftretenden Beanspruchungen beherrscht werden. Darüber hinaus wird das kostenaufwendige Kokillengussverfahren vermieden und stattdessen ein kostengünstiges Halbzeug verwendet, welches durch das kostengünstige IHU-Verfahren verformt wird.

Erfindungsgemäss ist weiter vorgesehen, dass der Ein- oder Auslassstutzen als stirnseitige Verlängerung des Sammelkastens ausgebildet ist, wobei ein Teil des Deckels des Sammelkastens eine durch Drücken (von außen) und/oder IHU (von innen) hergestellte Längssicke aufweist und wobei die Längssicke konisch ausgebildet ist, und einen Querschnitt aufweist, der in einer vom Stutzen wegweisenden Richtung zunimmt, während die Querschnittsfläche des Sammelkastens abnimmt. Die Innen-Hochdruck-Umformung, das so genannte IHU-Verfahren ist an sich bekannt, z. B. aus der DE-A 102 04 107 für ein metallisches Gehäuse eines Abgaswärmeübertragers, in welches mittels IHU eine Dehnungssicke eingeformt ist. Beim IHU-Verfahren, auch Hydroformen genannt, werden geschlossene Gehäuseteile mittels eines flüssigen Druckmediums (Wasser) "aufgeblasen". Die zu verformenden Teile werden in Werkzeugformen der entsprechenden Kontur eingelegt und dann von innen mittels einer Druckflüssigkeit derart beaufschlagt, dass sich das Material des Gehäuses an die Kontur des Werkzeuges anlegt.

Aus der DE-A-100 56 074 ist ein Verfahren zur Herstellung eines Wärmeübertragers bekannt, bei dem ein Schritt eines Innenhochdruckverformens eines vorbereiteten rohrförmigen Körpers vorgesehen ist.

Aus der DE-A-196 47 964 ist ein Verfahren zur Herstellung von schlitzförmigen Durchbrüchen an Hohlprofilen mittels eines Innenhochdruck-Umformwerkzeugs bekannt, insbesondere bei Verwendung des Hohlprofils als Wasserkasten eines Fahrzeugkühlers.

Aus der EP-A- 0 676 609 ist ein Wärmetauscher bekannt, mit einem Sammelkasten, der eine Längssicke aufweist. Nach einer vorteilhaften Ausgestaltung der Erfindung wird nur der Deckel aus einem Halbzeug im IHU-Verfahren verformt und mit einem konventionellen Rohrboden verschweißt. Diese Maßnahme bringt bereits eine Reduzierung der Herstellkosten, insbesondere wenn vorteilhafterweise ein Aluminiumwalzblech als Halbzeug für den Deckel verwendet wird.

In weiterer vorteilhafter Ausgestaltung der Erfindung können sowohl der Deckel als auch der Rohrboden aus einem Halbzeug durch das IHU-Verfahren hergestellt werden. Die Integration des Rohrbodens bringt eine weitere Kostenreduzierung, da Boden und Deckel aus demselben Halbzeug, vorteilhafterweise einem extrudierten Aluminiumrohr hergestellt werden. Die Formgebung des gesamten, aus Boden und Deckel bestehenden Sammelkastens kann durch das IHU-Verfahren erfolgen, womit sich eine Vielzahl von Möglichkeiten hinsichtlich der Formgebung ergeben.

Nach einer weiteren vorteilhaften Ausgestaltung der Erfindung wird der gesamte Sammelkasten, bestehend aus Boden, Deckel und Stutzen einstückig aus einem Halbzeug mittels IHU-Verfahren hergestellt. Dies geschieht vorteilhafterweise unter Verwendung eines extrudierten Aluminiumhalbzeugrohres, welches zur Ausbildung eines Anschlussstutzens für den Sammelkasten zunächst vorgebogen wird, sodass der Stutzen seine Richtung gegenüber dem übrigen Luftkasten erhält. Danach wird in das beispielsweise kreisrunde Halbzeug eine Längssicke durch Drücken von außen eingebracht, d. h. über einen Teil der Länge des Sammelkastens, sodass sich ein vom Stutzen zur gegenüberliegenden Stirnseite hin verjüngender Sammelkastenquerschnitt ergibt. Diese Formgebung begünstigt die Strömung eines Mediums im Sammelkasten. Darüber hinaus ergibt sich durch diese Abflachung des Sammelkastens der Vorteil verbesserter Einbaubedingungen in einem Kraftfahrzeug. Die Endform wird durch IHU hergestellt, indem das Halbzeugmaterial von innen durch den Hochdruck an die Kontur des Werkzeuges gedrückt wird. Die Vorteile dieses erfindungsgemäß hergestellten Sammelkastens sind hohe Temperatur- und Innendruckfestigkeit wegen des verwendeten Halbzeugmaterials und des geschlossenen Querschnittes sowie geringe Herstellkosten aufgrund des kostengünstigen IHU-Verfahrens.

Der Stutzen ist als stirnseitige Verlängerung des Sammelkastens ausgebildet. Bei einer Variante ist zusätzlich zu dem stirnseitigen Stutzen ein Stutzen seitlich am Sammelkasten angeordnet, insbesondere an den Sammelkasten angeschweißt oder angelötet.

Nach einer vorteilhaften Ausgestaltung der Erfindung ist die Stirnfläche, die dem Stutzen gegenüberliegt, durch einen einlötbaren Deckel verschlossen.

Damit werden eine dichte und druckfeste Verbindung und ein Abschluss des Sammelkastens erreicht.

Nach einer weiteren vorteilhaften Ausgestaltung der Erfindung werden die Öffnungen, so genannte Durchzüge im Boden des Sammelkastens durch Stanzen hergestellt, und zwar insbesondere durch Stanzen gegen hydraulischen Innen-Hochdruck, wie es aus der DE-A 195 32 860 der Anmelderin bekannt ist. Dieses Verfahren bietet den Vorteil einer "technologiereinen" Fertigung, da sowohl für die Formgebung des Sammelkastens als auch für die Herstellung der Durchzüge ein hydraulischer Innenhochdruck aufgebaut wird, wobei dieselben Vorrichtungen verwendbar sind. Dies reduziert die Fertigungskosten und hat darüber hinaus unter Umständen den Vorteil einer nicht spangebenden Umformung.

Nach einer vorteilhaften Variante werden die Öffnungen im Boden fakultativ vorgestanzt und durch Durchziehen hergestellt, wobei das Durchziehen besonders bevorzugt gegen einen hydraulischen Innenhochdruck erfolgt. Auch dies reduziert die Fertigungskosten und hat darüber hinaus unter Umständen den Vorteil einer nicht spangebenden Umformung.

Der Sammelkasten ist vorzugsweise mit einer Wandstärke ausgeführt, die insbesondere durchgehend zwischen 2 mm und 5 mm, besonders bevorzugt zwischen 3 mm und 4 mm liegt. Insbesondere die Druckstabilität des Wärmeübertragers wird hierdurch gesteigert, ohne dass der Fertigungsaufwand unzumutbar ansteigt.

Nach vorteilhaften Ausführungen weist der Boden eine Krümmung auf und/oder der Sammelkasten weist einen insbesondere durchgehend stufenlosen und/oder knickfreien Querschnitt auf. Hierdurch wird der Sammelkasten im Falle einer Druckbeaufschlagung unter Umständen weniger verformt und seine Druckstabilität gesteigert. Besonders vorteilhaft beträgt dabei ein Krümmungsradius der Krümmung des Bodens insbesondere durchgehend zwischen 100 mm und 400 mm, vorzugsweise zwischen 200 mm und 300 mm. Im Übergangsbereich zum Deckel beträgt ein Krümmungsradius des Bodens, hier im Querschnitt betrachtet, vorzugsweise zwischen 5 mm und 20 mm, besonders bevorzugt zwischen 10 mm und 15 mm. Bei Einhaltung eines oder mehrerer Parameter innerhalb der genannten Bereiche weist ein erfindungsgemäßer Wärmeübertrager unter Umständen eine besonders hohe Druckstabilität auf.

Ein Ausführungsbeispiel der Erfindung ist in der Zeichnung dargestellt und wird im Folgenden näher beschrieben. Es zeigen
- Fig. 1: einen erfindungsgemäßen Ladeluftkühler,
- Fig. 2: einen Eckausschnitt des erfindungsgemäßen Ladeluftkühlers gemäß Fig. 1,
- Fig. 3: einen ersten Querschnitt durch einen Luftkasten des Ladeluftkühlers gemäß Fig. 1 und 2 und
- Fig. 4: einen zweiten Querschnitt durch den Luftkasten.

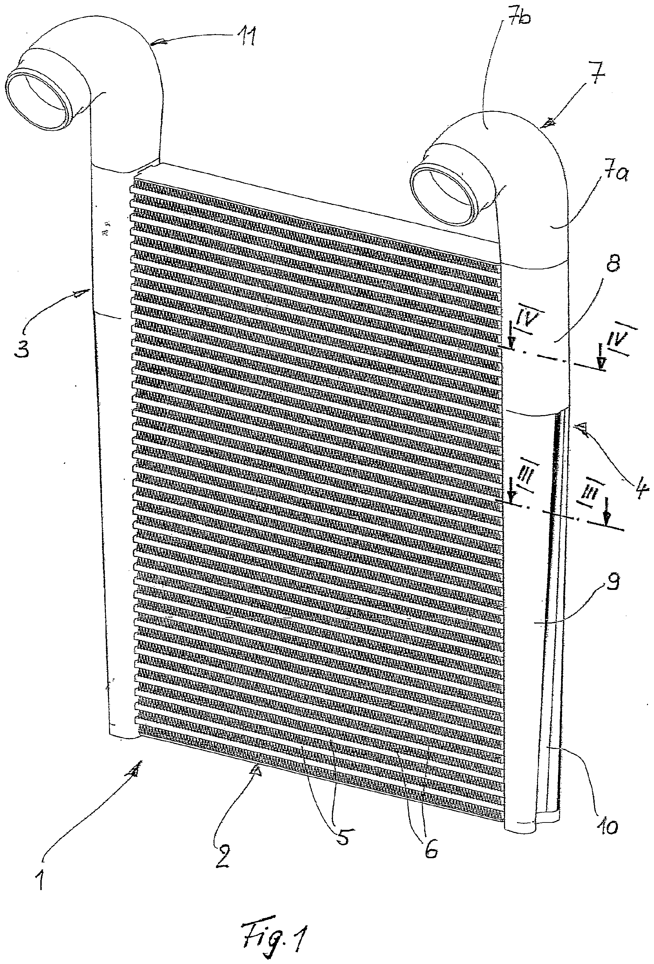

**Fig. 1** zeigt einen erfindungsgemäßen Ladeluftkühler 1 mit einem Wärmeübertragerblock 2 und beiderseits angeordneten Luftkästen 3, 4. Der Wärmeübertragerblock 2 besteht aus Flachrohren 5 und zwischen diesen angeordneten Wellrippen, welche von Umgebungsluft überströmt werden. Die Rohre 5 münden in die Luftkästen 3, 4 und sind mit diesen sowie mit den Wellrippen 6 verlötet. Alle Teile, Rohre 5, Wellrippen 6 und Luftkästen 3, 4 bestehen aus Aluminiumlegierungen. Jeder der beiden Luftkästen 3, 4 ist einstückig ausgebildet und besteht aus drei Abschnitten (erläutert für den Luftkasten 4), nämlich einem Anschlussstutzen 7, einem zylindrischen Teil 8 (nicht kreiszylindrisch) und einem konischen bzw. abgeflachten Teil 9, welches eine in Längsrichtung des Luftkastens 4 verlaufende Längssicke 10 aufweist. Der Stutzen 7 weist einen geraden Teil 7a auf, der sich fluchtend an den geraden Luftkastenteil 8 anschließt, und einen etwa um 90° bis 120° abgewinkelten Krümmer 7b. Der Luftkasten 3 ist spiegelbildlich zum Luftkasten 4 ausgebildet und weist einen Ladeluft-Eintrittsstutzen 11 auf. Die Ladeluft, welche von einem nicht dargestellten Kompressor eines Kraftfahrzeuges verdichtet wurde und eine erhöhte Temperatur aufweist, tritt in den Eintrittsstutzen 11 ein, wird über den Luftkasten 3 verteilt, durchströmt den Wärmeübertragerblock 2 bzw. dessen Rohre 5 in einer Richtung und gelangt in den gegenüberliegenden Luftkasten 4, aus welchem die Ladeluft durch den Austrittsstutzen 7 austritt. Da der Ladeluftkühler. 1 in diesem Fall symmetrisch aufgebaut ist, ist eine umgekehrte Strömungsrichtung, d. h. Eintritt in den Stutzen 7 und Austritt durch den Stutzen 11 ebenso möglich. Der Ladeluftkühler 1 ist - wie aus dem eingangs zitierten Stand der Technik bekannt - im vorderen Motorraum des Kraftfahrzeuges angeordnet, vielfach als Teil eines Kühlmoduls.

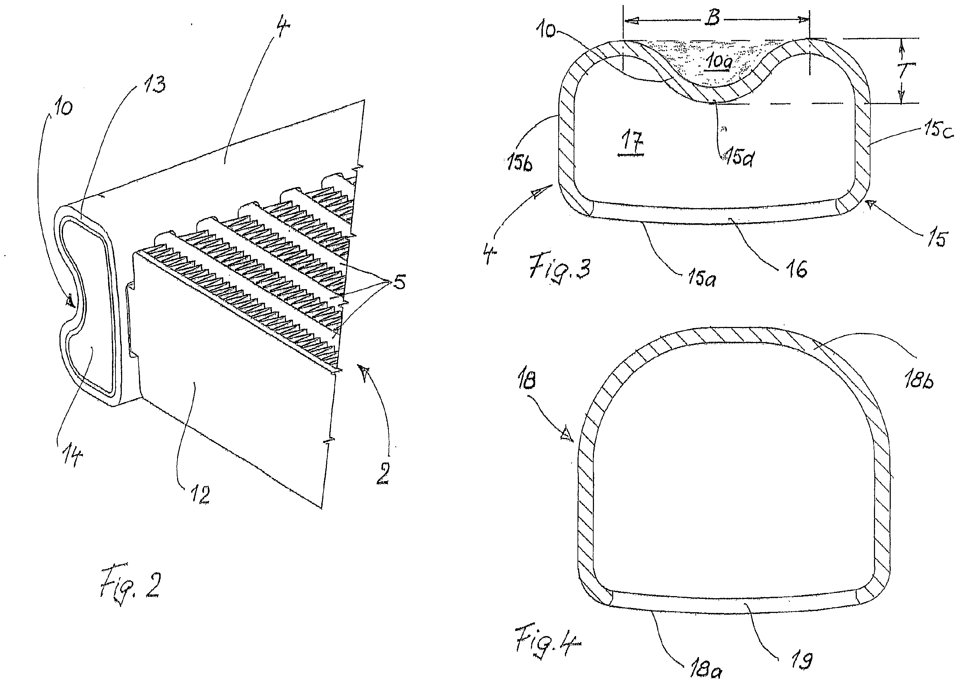

**Fig. 2** zeigt einen Eckbereich des Ladeluftkühlers 1 gemäß Fig. 1 mit dem Luftkasten 4, in welchen die Rohre 5 münden. Der Wärmeübertragerblock 2 ist seitlich durch ein Seitenteil 12 abgeschlossen. Der Luftkasten 4 weist eine Stirnfläche 13 auf, welche durch einen eingelöteten Deckel 14 verschlossen ist. In der Stirnfläche 13 ist das Profil der Längssicke 10 deutlich zu erkennen.

**Fig. 3** zeigt einen Schnitt durch den Luftkasten 4 etwa im Bereich der Schnittlinie **III-III** in Fig. 1 und im Bereich eines Rohres 5, wobei das Rohr 5 weggelassen ist. Der Luftkasten 4 weist einen geschlossenen, einstückigen Querschnitt 15 auf, da er aus einem geschlossenen Rohr, einem extrudierten Aluminiumhalbzeugrohr hergestellt ist. Der Querschnitt 15 ist durch einen leicht nach außen gewölbten Bodenbereich 15a, zwei etwa senkrecht dazu verlaufende Wandbereiche 15b, 15c sowie einen dem Bodenbereich 15a gegenüberliegenden, durch die Sicke 10 geprägten Sickenbereich 15d gekennzeichnet. Die Wandbereiche 15b, 15c und der anschließende Sickenbereich 15d bilden den "Deckel" des Luftkastens 4 und der Bodenbereich 15a den "Boden". Boden und Deckel sind somit integriert und bilden zusammen den Luftkasten 4. Innerhalb des leicht gewölbten Bodens 15a ist eine längliche Öffnung 16 angeordnet, welche in ihrem Querschnitt dem Querschnitt der Rohre 5 bzw. deren Rohrenden entspricht, die in diese Öffnungen eingelötet werden. Der Querschnitt 15 weist eine Querschnittsfläche 17 auf.

**Fig. 4** zeigt einen weiteren Schnitt durch den Luftkasten 4 im Bereich des zylindrischen Abschnittes 8 entlang der Linie **IV-IV** in Fig. 1. Der Luftkasten 4 weist in dem Bereich 8 einen geschlossenen Querschnitt 18 auf, der durch einen leicht gewölbten Boden 18a und einen teilweise gewölbten, teilweise geradlinig verlaufenden Deckelbereich 18b gekennzeichnet ist. Im Boden 18a ist eine längliche Öffnung 19 (Durchzug) zur Aufnahme eines nicht dargestellten Rohres angeordnet. Auch aus diesem Querschnitt 18 ist die Integration von Deckel und Boden erkennbar. Es ist auch möglich, den Luftkasten 4 über seine gesamte Länge mit dem Querschnitt 18, d. h. einem konstanten Querschnitt auszubilden, wenn auf den abgeflachten Teil 9 (vgl. Fig. 1) aus Einbaugründen verzichtet werden kann.

Die Herstellung des Luftkastens 4 und des Luftkastens 3 erfolgt nach folgendem Verfahren: Ausgangsmaterial ist ein Aluminiumhalbzeugrohr, welches hinsichtlich seiner Wandstärke an die Druck- und Temperaturbelastung des Ladeluftkühlers angepasst ist. Das extrudierte Halbzeugrohr, welches einen kreisförmigen Querschnitt aufweist, wird zunächst abgelängt (auf Länge geschnitten), danach wird der Anschlussstutzen (7, 11) vorgebogen, d. h. er erhält in diesem Verfahrensschritt seinen Biegeradius und seine Richtung. Danach wird das Rohr in eine Vorrichtung eingelegt und erhält durch Druck von außen mittels eines nicht dargestellten keilförmigen Werkzeuges eine Vorform der endgültigen Längssicke 10. Anschließend wird das Rohr in eine Werkzeugform für die Innenhochdruckumformung eingelegt und mit Innenhochdruck beaufschlagt, sodass sich die Rohrwand des Rohres an die Innenkontur der Werkzeugform anlegt. Damit ist die endgültige Form des Luftkastens (4, 3) erreicht. Die Längssicke 10 erstreckt sich - wie in Fig. 1 dargestellt - nur über einen Teil der Länge des Luftkastens 4, kann sich jedoch auch über den gesamten oder einen geringeren Teil der Gesamtlänge erstrecken. Die Sicke 10 ist - wie auch aus Fig. 1 erkennbar - konisch ausgebildet, d. h. sie nimmt hinsichtlich ihrer Tiefe und ihrer Breite in Richtung auf das dem Stutzen 7 abgewandte Ende des Luftkastens 4 zu. Der Querschnitt der Längssicke 10 ist aus Fig. 3 erkennbar, er ist durch eine Breite B, eine Tiefe T und eine grau angelegte Querschnittsfläche 10a gekennzeichnet. Die Querschnittsfläche 10a nimmt in einer vom Stutzen 7 ausgehenden Richtung zu, d. h. die Querschnittsfläche 17 des Luftkastens 4 wird mit zunehmendem Abstand vom Ein- bzw. Austrittsstutzen 7 kleiner, der Umfang des Luftkastens 4 bleibt dagegen im Wesentlichen konstant bzw. wächst maximal um einen Bereich von 10 % bis 15 %. Diese Querschnittsverminderung kommt den Strömungsbedingungen in den Luftkästen entgegen, da der Volumenstrom an Ladeluft in Richtung auf die Stutzen aufgrund der Rohrverteilung zunimmt. Die Abschrägung des Luftkastens 4 im Bereich des Abschnittes 9 erfolgt jedoch auch aus Einbaugründen, um in diesem Bereich Raum zu gewinnen.

Die Öffnungen 16 (vgl. Fig. 3) in dem Boden 15 des Luftkastens 4 können vorzugsweise durch Stanzen hergestellt werden, wobei anstelle einer Matrize im Inneren des Querschnittes ein hydraulischer Innenhochdruck aufgebaut wird. Dieses Verfahren zum Herstellen von Durchzügen in Rohren ist durch die DE-A 195 32 860 der Anmelderin bekannt. Es bietet den Vorteil einer spanlosen Herstellung. Darüber hinaus können die gleichen Vorrichtungen wie für die Innenhochdruckumformung der Luftkästen 3, 4 verwendet werden.

## Patentansprüche

1. Ladeluftkühler für Kraftfahrzeuge, insbesondere für Nutzfahrzeuge, mit einem aus Rohrenden aufweisenden Rohren (5) und aus zwischen den Rohren (5) angeordneten Rippen (6) bestehenden Wärmeübertragerblock (2) und zumindest einem seitlich angeordneten Sammelkasten (3, 4) zur Ein- oder Ausleitung von Ladeluft, wobei der zumindest eine Sammelkasten (3, 4) einen Boden mit Öffnungen zur Aufnahme der Rohrenden, einen Deckel sowie einen Ein- oder Auslassstutzen (7, 11) aufweist, wobei der Sammelkasten (3, 4) mindestens teilweise durch Innen-Hochdruck-Umformung (IHU) eines metallischen Halbzeuges hergestellt ist, **dadurch gekennzeichnet, dass** der Ein- oder Auslassstutzen (7, 11) als stirnseitige Verlängerung des Sammelkastens ausgebildet ist, wobei ein Teil (9) des Deckels des Sammelkastens (4) eine durch Drücken (von außen) und/oder IHU (von innen) hergestellte Längssicke (10) aufweist und wobei die Längssicke (10) konisch ausgebildet ist, und einen Querschnitt (10a) aufweist, der in einer vom Stutzen (7) wegweisenden Richtung zunimmt, während die Querschnittsfläche (17) des Sammelkastens (4) abnimmt.

2. Ladeluftkühler nach Anspruch 1, **dadurch gekennzeichnet, dass** nur der Deckel durch IHU hergestellt und mit dem Boden verschweißt ist.

3. Ladeluftkühler nach Anspruch 2, **dadurch gekennzeichnet, dass** das Halbzeug ein gewalztes Aluminiumblech ist.

4. Ladeluftkühler nach Anspruch 1, 2 oder 3, **dadurch gekennzeichnet, dass** das Halbzeug ein extrudiertes Aluminiumrohr ist.

5. Ladeluftkühler nach Anspruch 1, 2, 3 oder 4, **dadurch gekennzeichnet, dass** der Stutzen (7, 11) vor dem IHU-Prozess vorgebogen ist.

6. Ladeluftkühler nach einem der Ansprüche 1 bis 5, **dadurch gekennzeichnet, dass** der Sammelkasten (4) nach dem IHU-Prozess mindestens eine offene Stirnfläche (13) aufweist, die durch einen einlötbaren Deckel (14) geschlossen ist.

7. Ladeluftkühler nach einem der Ansprüche 1 bis 6, **dadurch gekennzeichnet, dass** die Öffnungen im Boden (15) durch Stanzen, insbesondere durch Stanzen gegen einen hydraulischen Innenhochdruck hergestellt sind.

8. Ladeluftkühler nach einem der Ansprüche 1 bis 6, **dadurch gekennzeichnet, dass** die Öffnungen im Boden (15) durch Vorstanzen vor der IHU und/oder Durchziehen, insbesondere Durchziehen gegen einen hydraulischen Innenhochdruck hergestellt sind.

9. Ladeluftkühler nach einem der vorhergehenden Ansprüche, **dadurch gekennzeichnet, dass** der Sammelkasten eine Wandstärke aufweist, die zumindest bereichsweise, vorzugsweise größtenteils größer als 2 mm, insbesondere größer als 3 mm ist.

10. Ladeluftkühler nach einem der vorhergehenden Ansprüche, **dadurch gekennzeichnet, dass** der Sammelkasten eine Wandstärke aufweist, die zumindest bereichsweise, vorzugsweise größtenteils kleiner als 5 mm, insbesondere kleiner als 4 mm ist.

11. Ladeluftkühler nach einem der vorhergehenden Ansprüche, **dadurch gekennzeichnet, dass** der Boden eine Krümmung aufweist, die zumindest bereichsweise, vorzugsweise größtenteils einen Krümmungsradius größer als 100 mm, insbesondere größer als 200 mm aufweist.

12. Ladeluftkühler nach einem der vorhergehenden Ansprüche, **dadurch gekennzeichnet, dass** der Boden eine Krümmung aufweist, die zumindest bereichsweise, vorzugsweise größtenteils einen Krümmungsradius kleiner als 400 mm, insbesondere kleiner als 300 mm aufweist

13. Ladeluftkühler nach einem der vorhergehenden Ansprüche, **dadurch gekennzeichnet, dass** der Boden im Übergangsbereich zum Deckel eine Krümmung aufweist, die zumindest bereichsweise, vorzugsweise größtenteils einen Krümmungsradius größer als 5 mm, insbesondere größer als 10 mm aufweist.

14. Ladeluftkühler nach einem der vorhergehenden Ansprüche, **dadurch gekennzeichnet, dass** der Boden im Übergangsbereich zum Deckel eine Krümmung aufweist, die zumindest bereichsweise, vorzugsweise größtenteils einen Krümmungsradius kleiner als 20 mm, insbesondere kleiner als 15 mm aufweist.

15. Ladeluftkühler nach einem der vorhergehenden Ansprüche, **dadurch gekennzeichnet, dass** der Sammelkasten zumindest bereichsweise, vorzugsweise größtenteils einen stufen- und/oder knickfreien Querschnitt aufweist.

16. Ladeluftkühler nach einem der vorhergehenden Ansprüche, **dadurch gekennzeichnet, dass** der als stirnseitige Verlängerung des Sammelkastens ausgebildete Stutzen gekrümmt ist.

17. Ladeluftkühler nach einem der vorhergehenden Ansprüche, **dadurch gekennzeichnet, dass** ein Stutzen seitlich am Sammelkasten angeordnet ist.

## Claims

1. A charge air cooler for motor vehicles, in particular for utility vehicles, with a heat exchanger unit (2), which consists of tubes (5) having tube ends and fins (6) arranged between the tubes (5), and at least one laterally arranged header box (3, 4) for introducing or discharging charge air, wherein the at least one header box (3, 4) has a bottom with openings for receiving the tube ends, a cover and an inlet or outlet connecting pipe (7, 11), wherein the header box (3, 4) is at least partially produced by internal high-pressure forming (IHF) of a metallic semi-finished product, **characterised in that** the inlet or outlet connecting pipe (7, 11) is designed as an end-side extension of the header box, wherein a part (9) of the cover of the header box (4) has a longitudinal bead (10) produced by pressing (from the outside) and/or IHF (from the inside) and wherein the longitudinal bead (10) is of conical design and has a cross-section (10a) which increases in a direction pointing away from the connecting pipe (7) while the cross-sectional area (17) of the header box (4) decreases.

2. The charge air cooler as claimed in claim 1, **characterised in that** only the cover is produced by IHF and is welded to the bottom.

3. The charge air cooler as claimed in claim 2, **characterised in that** the semi-finished product is a rolled aluminium sheet.

4. The charge air cooler as claimed in claim 1, 2 or 3, **characterised in that** the semi-finished product is an extruded aluminium tube.

5. The charge air cooler as claimed in claim 1, 2, 3 or 4, **characterised in that** the connecting pipe (7, 11) is prebent before the IHF process.

6. The charge air cooler as claimed in one of claims 1 to 5, **characterised in that**, after the IHF process, the header box (4) has at least one open end surface (13) which is closed by a cover (14) which can be soldered into place.

7. The charge air cooler as claimed in one of claims 1 to 6, **characterised in that** the openings in the bottom (15) are produced by punching, in particular by punching counter to a hydraulic internal high pressure.

8. The charge air cooler as claimed in one of claims 1 to 6, **characterised in that** the openings in the bottom (15) are produced by prepunching before the IHF and/or by drawing through, in particular drawing through counter to a hydraulic internal high pressure.

9. The charge air cooler as claimed in one of the preceding claims, **characterised in that** the header box has a wall thickness which, at least in some regions, preferably for the most part, is greater than 2 mm, in particular greater than 3 mm.

10. The charge air cooler as claimed in one of the preceding claims, **characterised in that** the header box has a wall thickness which, at least in some regions, preferably for the most part, is smaller than 5 mm, in particular smaller than 4 mm.

11. The charge air cooler as claimed in one of the preceding claims, **characterised in that** the bottom has a curvature which, at least in some regions, preferably for the most part, has a radius of curvature greater than 100 mm, in particular greater than 200 mm.

12. The charge air cooler as claimed in one of the preceding claims, **characterised in that** the bottom has a curvature which, at least in some regions, preferably for the most part, has a radius of curvature smaller than 400 mm, in particular smaller than 300 mm.

13. The charge air cooler as claimed in one of the preceding claims, **characterised in that** the bottom in the transition region to the cover has a curvature which, at least in some regions, preferably for the most part, has a radius of curvature greater than 5 mm, in particular greater than 10 mm.

14. The charge air cooler as claimed in one of the preceding claims, **characterised in that** the bottom in the transition region to the cover has a curvature which, at least in some regions, preferably for the most part, has a radius of curvature smaller than 20 mm, in particular smaller than 15 mm.

15. The charge air cooler as claimed in one of the preceding claims, **characterised in that** the header box, at least in some regions, preferably for the most part, has a step- and/or kink-free cross-section.

16. The charge air cooler as claimed in one of the preceding claims, **characterised in that** the connecting pipe designed as an end-side extension of the header box is curved.

17. The charge air cooler as claimed in one of the preceding claims, **characterised in that** a connecting pipe is arranged laterally on the header box.

## Revendications

1. Refroidisseur d'air de suralimentation pour des véhicules automobiles, en particulier pour des véhicules utilitaires, comprenant un bloc d'échangeur de chaleur (2) se composant de tubes (5) présentant des extrémités tubulaires et se composant d'ailettes (6) disposées entre les tubes (5), et comprenant au moins un bac collecteur (3, 4) disposé latéralement et servant à l'entrée ou à la sortie d'air de suralimentation, où le bac collecteur (3, 4) au moins au nombre de un présente un fond comportant des ouvertures servant au logement des extrémités tubulaires, présente un couvercle ainsi qu'une tubulure d'entrée ou de sortie (7, 11), où le bac collecteur (3, 4) est fabriqué au moins partiellement par formage sous haute pression interne (IHU) d'un demi-produit métallique, **caractérisé en ce que** la tubulure d'entrée ou de sortie (7, 11) est configurée comme un prolongement, côté frontal, du bac collecteur, où une partie (9) du couvercle du bac collecteur (4) présente une moulure longitudinale (10) réalisée (de l'extérieur) par pression et / ou réalisée (de l'intérieur) par formage IHU, et où la moulure longitudinale (10) est configurée de façon conique et présente une section (10a) qui augmente dans une direction s'éloignant de la tubulure (7), tandis que la surface de section (17) du bac collecteur (4) diminue.

2. Refroidisseur d'air de suralimentation selon la revendication 1, **caractérisé en ce que** seulement le couvercle est fabriqué par formage IHU et soudé avec le fond.

3. Refroidisseur d'air de suralimentation selon la revendication 2, **caractérisé en ce que** le demi-produit est une tôle laminée en aluminium.

4. Refroidisseur d'air de suralimentation selon la revendication 1, 2 ou 3, **caractérisé en ce que** le demi-produit est un tube en aluminium extrudé.

5. Refroidisseur d'air de suralimentation selon la revendication 1, 2, 3 ou 4, **caractérisé en ce que** la tubulure (7, 11) est préalablement pliée avant le processus de formage IHU.

6. Refroidisseur d'air de suralimentation selon l'une quelconque des revendications 1 à 5, **caractérisé en ce que** le bac collecteur (4) présente, après le processus de formage IHU, au moins une face frontale ouverte (13) qui est fermée par un couvercle (14) pouvant être intégré par brasage.

7. Refroidisseur d'air de suralimentation selon l'une quelconque des revendications 1 à 6, **caractérisé en ce que** les ouvertures formées dans le fond (15) sont réalisées par poinçonnage, en particulier par poinçonnage effectué en s'opposant à une haute pression interne hydraulique.

8. Refroidisseur d'air de suralimentation selon l'une quelconque des revendications 1 à 6, **caractérisé en ce que** les ouvertures formées dans le fond (15) sont réalisées par poinçonnage préalable effectué avant le formage IHU et / ou par soyage, en particulier par soyage effectué en s'opposant à une haute pression interne hydraulique.

9. Refroidisseur d'air de suralimentation selon l'une quelconque des revendications précédentes, **caractérisé en ce que** le bac collecteur présente une épaisseur de paroi qui, au moins en partie, de préférence sur la plus grande partie, est supérieure à 2 mm, en particulier supérieure à 3 mm.

10. Refroidisseur d'air de suralimentation selon l'une quelconque des revendications précédentes, **caractérisé en ce que** le bac collecteur présente une épaisseur de paroi qui, au moins en partie, de préférence sur la plus grande partie, est inférieure à 5 mm, en particulier inférieure à 4 mm.

11. Refroidisseur d'air de suralimentation selon l'une quelconque des revendications précédentes, **caractérisé en ce que** le fond présente une courbure qui, au moins en partie, de préférence sur la plus grande partie, a un rayon de courbure supérieur à 100 mm, en particulier supérieur à 200 mm.

12. Refroidisseur d'air de suralimentation selon l'une quelconque des revendications précédentes, **caractérisé en ce que** le fond présente une courbure qui, au moins en partie, de préférence sur la plus grande partie, a un rayon de courbure inférieur à 400 mm, en particulier inférieur à 300 mm.

13. Refroidisseur d'air de suralimentation selon l'une quelconque des revendications précédentes, **caractérisé en ce que** le fond, dans la zone de transition vers le couvercle, présente une courbure qui, au moins en partie, de préférence sur la plus grande partie, a un rayon de courbure supérieur à 5 mm, en particulier supérieur à 10 mm.

14. Refroidisseur d'air de suralimentation selon l'une quelconque des revendications précédentes, **caractérisé en ce que** le fond, dans la zone de transition vers le couvercle, présente une courbure qui, au moins en partie, de préférence sur la plus grande partie, a un rayon de courbure inférieur à 20 mm, en particulier inférieur à 15 mm.

15. Refroidisseur d'air de suralimentation selon l'une quelconque des revendications précédentes, **caractérisé en ce que** le bac collecteur présente au moins en partie, de préférence sur la plus grande partie, une section non étagée et / ou exempte de coude.

16. Refroidisseur d'air de suralimentation selon l'une quelconque des revendications précédentes, **caractérisé en ce que** la tubulure configurée comme un prolongement, côté frontal, du bac collecteur est courbée.

17. Refroidisseur d'air de suralimentation selon l'une quelconque des revendications précédentes, **caractérisé en ce qu'**une tubulure est disposée latéralement sur le bac collecteur.
